(19) **Europäisches Patentamt / European Patent Office / Office européen des brevets**

(11) **EP 1 953 765 A1**

(12) **EUROPEAN PATENT APPLICATION**
published in accordance with Art. 153(4) EPC

(43) Date of publication:
**06.08.2008 Bulletin 2008/32**

(21) Application number: **05811317.6**

(22) Date of filing: **22.11.2005**

(51) Int Cl.:
*H01B 1/06* [(2006.01)]     *G01N 27/409* [(2006.01)]
*G01N 27/416* [(2006.01)]    *H01B 13/00* [(2006.01)]
*H01M 8/02* [(2006.01)]

(86) International application number:
**PCT/JP2005/021943**

(87) International publication number:
**WO 2007/060748 (31.05.2007 Gazette 2007/22)**

(84) Designated Contracting States:
**DE FR GB**

(71) Applicant: **Nippon Sheet Glass Company Limited
Tokyo 108-6321 (JP)**

(72) Inventors:
 • **ABE, Yoshihiro
   Nisshin-shi, Aichi 4700116 (JP)**

 • **NISHIZAKI, Sayaka
   Ena-shi, Gifu 5097795 (JP)**
 • **MUROI, Toshiyuki
   Ena-shi, Gifu 5097795 (JP)**
 • **TAKAHASHI, Shigeaki
   Ena-shi, Gifu 5097795 (JP)**

(74) Representative: **TBK-Patent
   Bavariaring 4-6
   80336 München (DE)**

(54) **PROTON CONDUCTIVE MATERIAL, PROCESS FOR PRODUCING THE SAME, HYDROGEN CONCENTRATION CELL, HYDROGEN SENSOR AND FUEL CELL**

(57)    This provides a proton conductive material capable of operating from a low temperature range to a middle temperature range and being produced easily at low cost and a process for producing the same. This also provides a hydrogen concentration cell, a hydrogen sensor and a fuel cell equipped with the proton conductive material. The proton conductive material contains the element of calcium, the element of sulfur and the element of hydrogen, respectively, and having a proton conductivity of not less than $10^{-6}$ S/cm at room temperature. The proton conductive material can contain Ca in an amount of not less than 10 % by weight and not more than 45 % by weight calculated as CaO, S in an amount of not less than 15 % by weight and not more than 60 % by weight calculated as $SO_3$, and H in an amount of not less than 5 % by weight and not more than 55 % by weight calculated as $H_2O$. The proton conductive material can also contain P in an amount of not less than 0.1 % by weight and not more than 50 % by weight calculated as $P_2O_5$.

Fig.3

# EP 1 953 765 A1

**Description**

TECHNICAL FIELD

The present invention relates to a proton conductive material and a process for producing the same. This invention also relates to a hydrogen concentration cell, a hydrogen sensor and a fuel cell equipped with the proton conductive material.

BACKGROUND ART

A fuel cell, a hydrogen concentration cell, a hydrogen sensor and the like are attracting attention these days from the viewpoint of environmental pollution and energy. In order to function fully, these need to use an appropriate electrolyte to be passed through by hydrogen ions (protons) . Namely, it is preferable that the electrolyte withstands service conditions, exhibits good film formability, and has a proton conductivity which is as high as possible.

Today, an organic solid polymer membrane (e.g., Nafion) operating in a low temperature range of about 80 ˚C, and an inorganic solid perovskite type electrolyte operating in a high temperature range of about 900 ˚C are known as proton conductive electrolytes.

The above proton conductive electrolytes have the following defects. The former is expensive and restricted in operating temperature. The latter does not work unless the temperature is high. Additionally, to form a membrane, it is necessary to be sintered at a high temperature of not less than 1200 ˚C.

As proton conductive materials, $H_3MO_{12}PO_{40} \cdot 29H_2O$ (12 molybdophosphoric acid) and $H_3W_{12}PO_{40} \cdot 29H_2O$ (12 tungstophosphoric acid) of hydrated crystalline oxoacid show a high proton conductivity of 2 x $10^{-1}$ S/cm at room temperature. However, these crystals are easily dehydrated, which causes a decrease in electric conductivity. These crystals also have a drawback of corroding surrounding materials because they are strong acids. Therefore, attempts to form proton conductive membranes or plates have been made but have not yielded satisfying results so far.

Moreover, quaternary amine sulfate having a chemical formula of $C_6H_{12}N_2(H_2SO_4)_{1.5}$, $LiN_2H_5SO_4$ or the like is known as an anhydrous compound having a hydrogen bond, that is, a solid containing no water of crystallization but allowing protons to move along a hydrogen bond. The quaternary amine sulfate is stable and shows a considerable proton conductivity at up to about 200 ˚C, but a poor conductivity at room temperature and starts decomposing at high temperatures of not less than 200 ˚C. Solid caustic potash (KOH) show a considerable proton conductivity in a temperature range from 248 to 406 ˚C, but cannot be used in the air because it is hydroscopic and prone to absorb carbon dioxide gas.

As proton conductive materials, cesium hydrogen sulfide $CsHSO_4$ and its analogous compounds have a higher proton conductivity with the increase of temperature and cause a phase shift at 144 ˚C and then have a sharp increase in proton conductivity, but have a low proton conductivity at room temperature.

DISCLOSURE OF INVENTION

The present invention has been made in view of the above circumstances and it is an object of the present invention to provide a proton conductive material capable of operating from a low temperature range to a middle temperature range (e.g., 200 ˚C) and being produced easily at low cost and a process for producing the same. It is also an object of the present invention to provide a hydrogen concentration cell, a hydrogen sensor and a fuel cell equipped with the proton conductive material.

The present inventors have long been engaged in development of proton conductive materials earnestly. They have found that a material, such as calcium sulfate, containing the element of calcium (Ca), the element of sulfur (S) and the element of hydrogen (H), respectively, is useful as a proton conductive material and have completed the present invention on this finding.

Namely, a proton conductive material according to the present invention is characterized in containing the element of calcium (Ca), the element of sulfur (S) and the element of hydrogen (H), respectively, and having a proton conductivity of not less than $10^{-6}$ S/cm at room temperature. The room temperature means 25 ˚C.

Generally, hydrogen (H) forms any of molecular water, water of crystallization and mobile protons which are shared by the proton conductive material.

The proton conductive material according to the present invention can be produced by the production processes shown below as examples, but can also be produced by other production processes without limitation to the following production processes.

A process for producing a proton conductive material according to the present invention is characterized in comprising the steps of forming a mixture of calcium sulfate hemihydrate ($CaSO_4 \cdot 1/2H_2O$, gypsum hemihydrate) and an aqueous solution, and hardening the mixture into a hardened body. The aqueous solution preferably contains acid.

A process for producing a proton conductive material according to the present invention is characterized in comprising the steps of forming a mixture of calcium sulfate hemihydrate (CaSO$_4\cdot$ 1/2H$_2$O, gypsum hemihydrate) and an aqueous solution containing phosphoric acid and/or phosphate, and hardening the mixture into a hardened body.

A process for producing a proton conductive material according to the present invention is characterized in comprising the steps of obtaining a hardened body using gypsum hydrate as a base material, and introducing mobile hydrogen ions into the hardened body using the gypsum hydrate as a base material. In introducing mobile hydrogen ions, for example, the hardened body using the gypsum hydrate as a base material can be impregnated with an aqueous solution containing phosphoric acid and/or phosphate.

A hydrogen concentration cell according to the present invention is a hydrogen concentration cell comprising a reference electrode facing a reference material, a measuring electrode facing an obj ect to be measured, and an electrolyte layer sandwiched between the reference electrode and the measuring electrode, and characterized in that the electrolyte layer is formed of a proton conductive material according to any one of the above claims. In measurement, the reference material is brought into contact with the reference electrode and at the same time an object to be measured is brought into contact with the measuring electrode. An electromotive force is generated between the reference electrode and the measuring electrode, based on the hydrogen concentration of the reference material and the hydrogen concentration of the object to be measured.

A hydrogen sensor according to the present invention is a hydrogen concentration cell type hydrogen sensor comprising a reference electrode facing a reference material, a measuring electrode facing an object to be measured, and an electrolyte layer sandwiched between the reference electrode and the measuring electrode, and characterized in that the electrolyte layer is formed of a proton conductive material according to any one of the above claims.

In measurement, the reference material is brought into contact with the reference electrode and an object to be measured is brought into contact with the measuring electrode. An electromotive force is generated between the reference electrode and the measuring electrode, based on the hydrogen concentration of the reference material and the hydrogen concentration of the object to be measured. The hydrogen concentration of the object to be measured is detected based on the electromotive force.

A fuel cell according to the present invention is a fuel cell comprising a fuel electrode to be supplied with fuel, an oxidant electrode to be supplied with an oxidant, and an electrolyte layer sandwiched between the fuel electrode and the oxidant electrode, and characterized in that the electrolyte layer is formed of a proton conductive material according to any one of the above claims.

Fuel is supplied to a fuel electrode and an oxidant is supplied to an oxidant electrode. Hydrogen generated from the fuel is oxidized and divided into protons (hydrogen ions) and electrons. The protons travel through the electrolyte layer and reach the oxidant electrode, where the protons are reacted with the oxidant (oxygen) to form water, and through this process, electricity is obtained and thus electric power is produced.

Advantage of the Invention

According to the proton conductive material according to the present invention, a good proton conductivity can be obtained at room temperature.

According to the process for producing a proton conductive material according to the present invention, a proton conductive material having a good proton conductivity at room temperature can be obtained.

According to the hydrogen concentration cell or the hydrogen sensor according to the present invention, a good detection output can be obtained because of the use of a proton conductive material having a good proton conductivity at room temperature.

According to the fuel cell according to the present invention, a good output of power generation can be obtained because of the use of a proton conductive material having a good proton conductivity at room temperature.

BRIEF DESCRIPTION OF DRAWINGS

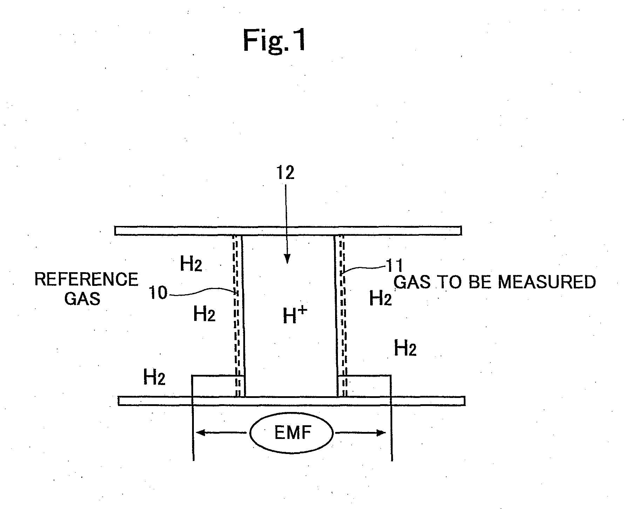

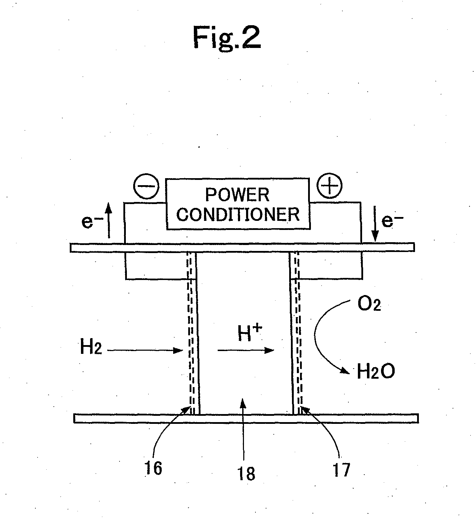

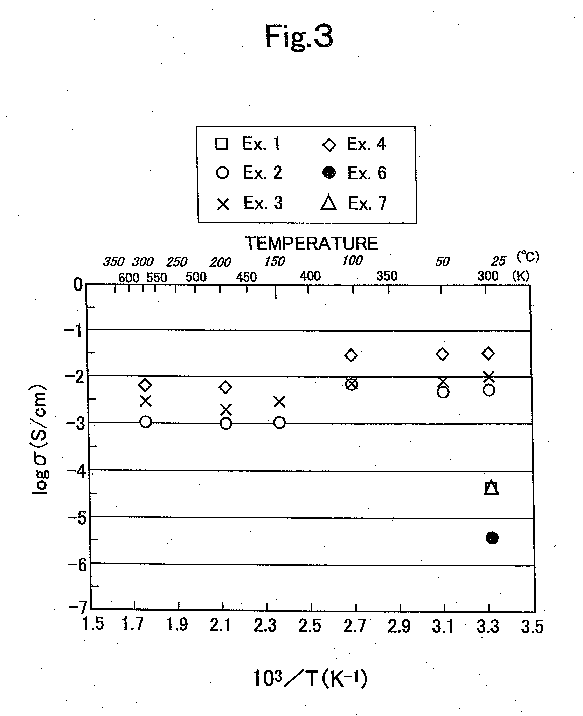

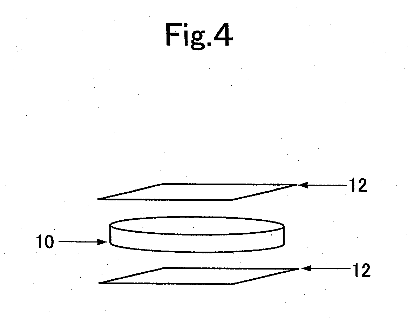

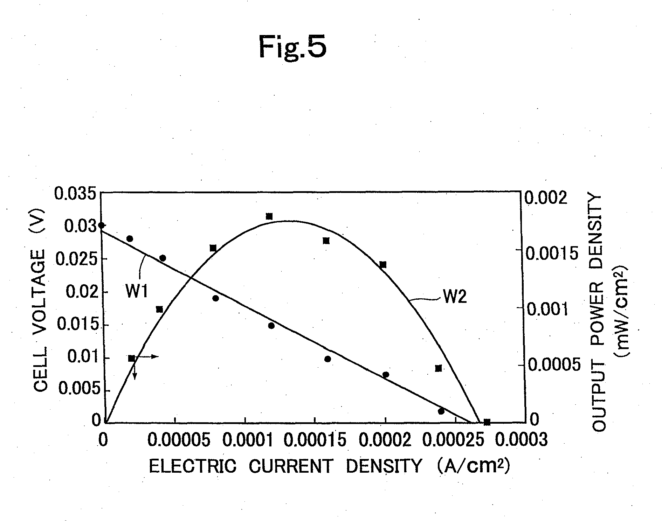

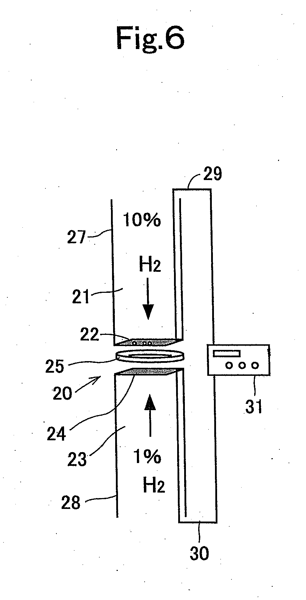

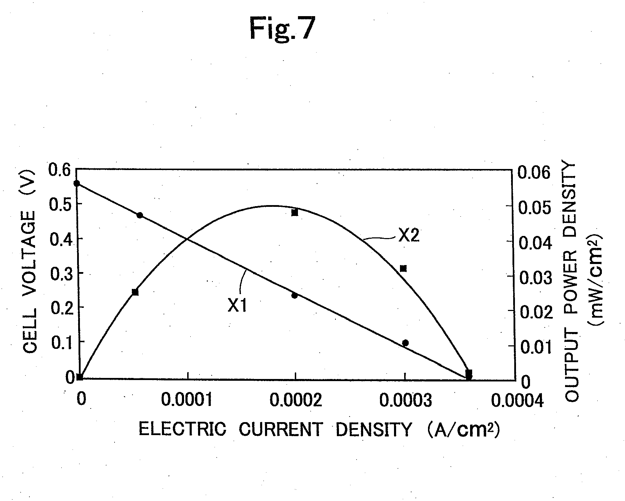

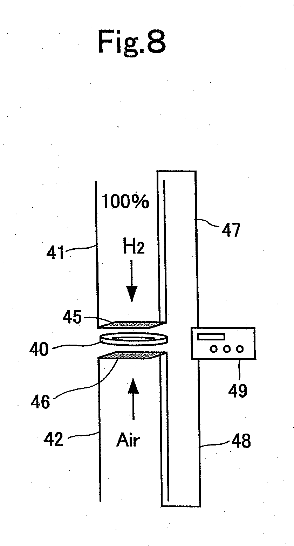

Figure 1 is a conceptual diagram schematically showing a hydrogen sensor. Figure 2 is a conceptual diagram schematically showing a fuel cell. Figure 3 is a graph showing the relationship between temperature and proton conductivity. Figure 4 is a conceptual diagram showing a mode for measuring proton conductivity. Figure 5 is a graph showing the relationship between current density and cell voltage of a hydrogen concentration cell. Figure 6 is a conceptual diagram of a proton conductive material used as a hydrogen concentration cell. Figure 7 is a graph showing the relationship between current density and cell voltage of a fuel cell. Figure 8 is a conceptual diagram of a proton conductive material used as an oxygen-hydrogen fuel cell.

BEST MODE FOR CARRYING OUT THE INVENTION

A proton conductive material according to the present invention contains the element of calcium (Ca), the element of sulfur (S) and the element of hydrogen (H) , respectively, and has a proton conductivity of not less than 10$^{-6}$ S/cm at room temperature. The proton conductive material can also contain at least one of barium (Ba) and zinc, if necessary.

The proton conductive material according to the present invention can be formed of ceramics using sulfate as a base material. As the sulfate, calcium sulfate and/or barium sulfate can be employed.

The proton conductive material according to the present invention can adopt a mode of containing the element of calcium (Ca) in an amount of not less than 10 % by weight and not more than 45 % by weight calculated as CaO, the element of sulfur (S) in an amount of not less than 15 % by weight and not more than 60 % by weight calculated as $SO_3$ and the element of hydrogen (H) in an amount of not less than 5 % by weight and not more than 55 % by weight calculated as $H_2O$.

The term "containing the element of calcium in an amount of 10 % by weight calculated as CaO" used herein means that calcium may be contained not only in the form of CaO but also in the form of calcium compounds other than CaO (e.g., calcium sulfate), but if the Ca is counted as CaO, the content of CaO is 10 % by weight based on the total weight of the proton conductive material.

Here, the content of Ca calculated as CaO can be exemplified by 10 to 40 % by weight, 14 to 30 % by weight, 14 to 27 % by weight, or 16 to 23 % by weight. The content of S calculated as $SO_3$ can be exemplified by 15 to 50 % by weight, 18 to 40 % by weight, or 20 to 35 % by weight. The content of H calculated as $H_2O$ can be exemplified by 10 to 55 % by weight, 20 to 55 % by weight, or 25 to 50 % by weight. Of course, the contents are not limited to these ranges.

The proton conductive material according to the present invention can adopt a mode of containing the element of calcium (Ca) in an amount of not less than 10 % by weight and not more than 45 % by weight calculated as CaO, the element of sulfur (S) in an amount of not less than 15 % by weight and not more than 60 % by weight calculated as $SO_3$, the element of hydrogen (H) in an amount of not less than 5 % by weight and not more than 55 % by weight calculated as $H_2O$, and the element of phosphorus (P) in an amount of not less than 0.1 % by weight and not more than 50 % by weight calculated as $P_2O_5$. The content of P calculated as $P_2O_5$ can be exemplified by 0.5 to 40 % by weight, 1 to 35 % by weight or 2 to 30 % by weight. Of course, the contents are not limited to these ranges

The proton conductive material according to the present invention used herein can contain not less than 40 % by weight, (or not less than 45 % by weight, not less than 50 % by weight) of calcium sulfate ($CaSO_4$) . The proton conductive material can contain not less than 40 % by weight, (or not less than 45 % by weight, not less than 50 % by weight) of calcium sulfate dihydrate ($CaSO_4 \cdot 2H_2O$).

The proton conductive material according to the present invention can adopt a mode of being formed of a hardened body obtained by hardening, with water, a raw material containing calcium sulfate ($CaSO_4$) as a main component. The proton conductive material according to the present invention can adopt a mode of being formed by reacting a raw material containing not less than 40 % by weight of calcium sulfate ($CaSO_4$) with phosphoric acid. Therefore, the proton conductive material according to the present invention can adopt a mode of containing sulfate-phosphate-water as main components.

Moreover, the proton conductive material according to the present invention can adopt a mode of being formed of a hardened body obtained by mixing calcium sulfate hemihydrate ($CaSO_4 \cdot 1/2H_2O$, gypsum hemihydrate) and an aqueous solution and hardening the mixture.

The proton conductive material according to the present invention can adopt a mode of being formed of a hardened body obtained by mixing calcium sulfate hemihydrate ($CaSO_4 \cdot 1/2H_2O$, gypsum hemihydrate) and an aqueous solution containing phosphoric acid and/or phosphate and hardening the mixture.

The proton conductive material according to the present invention can adopt a mode of being formed by introducing mobile hydrogen ions into a hardened body using gypsum hydrate as a base material.

The proton conductive material according to the present invention can adopt a mode of being formed by impregnating a hardened material formed of a gypsum-based material with an aqueous solution containing phosphoric acid and/or phosphate.

The proton conductive material according to the present invention can have a proton conductivity of not less than $10^{-6}$ S/cm or not less than $10^{-5}$ S/cm at room temperature (25 ˚C) . If production conditions or service conditions are suitable, the proton conductivity can be not less than $10^{-4}$ S/cm, not less than $10^{-3}$ S/cm, or not less than $10^{-2}$ S/cm. The proton conductivity can also be not less than $10^{-1}$ S/cm.

The process for producing a proton conductive material according to the present invention can be typically exemplified by the following production processes (1) to (3).

(1) Calcium sulfate hemihydrate ($CaSO_4 \cdot 1/2H_2O$, gypsum hemihydrate = the hemihydrate of gypsum) before hardened with water is used. A production process comprises the steps of forming a mixture of calcium sulfate hemihydrate ($CaSO_4 \cdot 1/2H_2O$, gypsum hemihydrate) and an aqueous solution, and hardening the mixture to form a hardened body. To harden the mixture, it is suitable to leave the mixture as it is. Note that the body hardened with water becomes gypsum dihydrate (the dihydrate of gypsum, $CaSO_4 \cdot 2H_2O$).

(2) A production process comprises the steps of forming a mixture of calcium sulfate hemihydrate ($CaSO_4 \cdot 1/2H_2O$, gypsum hemihydrate = the hemihydrate of gypsum) and an aqueous solution containing phosphoric acid and/or phosphate, and hardening the mixture. To harden the mixture, it is suitable to leave the mixture as it is.

(3) A production process comprises the steps of obtaining a hardened body using gypsum hydrate as a base material, and introducing mobile hydrogen ions into the hardened body using the gypsum hydrate as a base material. To introduce mobile hydrogen ions, it is preferable to impregnate the hardened body with an aqueous solution containing phosphoric acid and/or phosphate. In this case, an aqueous solution containing phosphoric acid and/or phosphate and the hardened body can be brought in contact with each other, or the hardened body can be immersed in the aqueous solution. Although different depending on the composition, production process, size or the like of the proton conductive material, the temperature of the aqueous solution can be appropriately exemplified by room temperature to 120 ˚C, room temperature to 100 ˚C, room temperature to 80 ˚C or the like. However, the temperature is not limited to these ranges. Although different depending on the composition, production process, size or the like of the proton conductive material, the immersion time can be exemplified by 3 seconds to 120 minutes, 10 seconds to 60 minutes, 1 minute to 30 minutes or the like. However, the immersion time is not limited to these ranges.

The hydrogen sensor according to the present invention comprises, as shown in Figure 1, a reference electrode 10 facing a reference gas which serves as a reference material, a measuring electrode 11 facing a gas to be measured which serves as an object to be measured, and an electrolyte layer 12 sandwiched between the reference electrode 10 and the measuring electrode 11. The reference electrode 10 and the measuring electrode 11 are electrically conductive and formed of highly corrosion-resistant materials. The materials can be exemplified by nickel, platinum, gold, rhodium and ruthenium, but are not limited to these. The reference electrode 10 and the measuring electrode 11 can be formed by known processes, such as ordinary coating processes, coating and baking processes, PVD processes and CVD processes. The electrolyte layer 12 is formed of any of the above proton conductive materials having a high proton conductivity at room temperature. In measurement, the reference gas is brought in contact with the reference electrode 10 and at the same time a gas to be measured is brought in contact with the measuring electrode 11. An electromotive force is generated between the reference electrode 10 and the measuring electrode 11, based on the hydrogen concentration of the reference gas and the hydrogen concentration of the gas to be measured or based on hydrogen partial pressure of the reference gas and hydrogen partial pressure of the gas to be measured. The hydrogen concentration of the gas to be measured is detected based on the electromotive force.

The fuel cell according to the present invention comprises, as shown in Figure 2, a fuel electrode 16 to be supplied with fuel, an oxidant electrode 17 (also referred to as an air electrode) to be supplied with an oxidant, and an electrolyte layer 18 sandwiched between the fuel electrode 16 and the oxidant electrode 17. The fuel electrode 16 and the oxidant electrode 17 can be formed of a material having gas permeability and electric conductivity. The electrolyte layer 18 is formed of any of the above proton conductive materials having a high proton conductivity at room temperature. As the fuel, a hydrogen-rich hydrogen gas such as natural gas and methanol, a hydrogen-containing gas or the like can be used. As the oxidant, oxygen gas, oxygen-containing gas (generally the air) or the like can be used. When fuel is supplied to the fuel electrode 16 and at the same time an oxidant is supplied to the oxidant electrode 17, a reaction of oxidizing the fuel occurs at the fuel electrode 16 to generate protons ($H^+$) and electrons ($e^-$). The protons ($H^+$) travel through the electrolyte layer 18 and reach the oxidant electrode 17. At the oxidant electrode 17 the protons ($H^+$) react with and are reduced by the oxidant (generally the air) to generate water ($H_2O$) Electric power is thus generated. A catalyst can be provided at the oxidant electrode 17 and the fuel electrode 16. The catalyst can be provided at the boundary of the oxidant electrode 17 and the electrolyte layer 18 and at the boundary of the fuel electrode 16 and the electrolyte layer 18.

Examples

Examples of the present invention will be described concretely.

In Example 1, a mixture of powder of gypsum hemihydrate ($CaSO_4 \cdot 1/2H_2O$) and water, as starting materials, at a weight ratio of 50:50 (= 1:1) was formed. A disk-shaped body (15 mm diameter x 1 mm thick) was shaped from the mixture. The shaped body was hardened by natural drying into a hardened body, and thus an oxide material was formed as a test piece.

In Example 2, gypsum hemihydrate ($CaSO_4 \cdot 1/2H_2O$) was used and a mixture of gypsum hemihydrate ($CaSO_4 \cdot 1/2H_2O$), phosphoric acid ($H_3PO_4$) and water, as starting materials, at a weight ratio of 50:40:10 was formed. A disk-shaped body (15 mm diameter x 1 mm thick) was shaped from the mixture. The shaped body was hardened by natural drying to form a hardened body, and an oxide material was thus formed as a test piece.

In Example 3, an oxide material as a test piece was formed in a similar way to Example 2, except that a mixture of gypsum hemihydrate ($CaSO_4 \cdot 1/2H_2O$), water and phosphoric acid ($H_3PO_4$), as starting materials, at a weight ratio of 50:33:17 was formed.

In Example 4, a disk-shaped body (15 mm diameter x 1 mm thick) using gypsum hydrate as a base material was formed. The shaped body using the gypsum hydrate as a base material was formed as follows. Namely, a mixture of gypsum hemihydrate ($CaSO_4 \cdot 1/2H_2O$) and water, as starting materials, at a weight ratio of 50:50 (a weight ratio of 1:1) was formed. A disk-shaped body (15 mm diameter x 1 mm thick) was formed from the mixture. The shaped body was hardened by natural drying into a hardened body. This hardened body was immersed in a phosphoric acid solution (100 ˚C x 10 minutes) to impregnate phosphoric acid into the inside of the hardened body. Subsequently, the shaped body was taken out of the phosphoric acid solution. The phosphoric acid solution had a concentration of not less than 85 % by weight. Subsequently, the hardened body was washed with a large quantity of water and dried at room temperature. Thereby, mobile hydrogen ions were introduced into the hardened body using the gypsum hydrate as a base material and proton conductivity was to be exhibited.

In Example 5, an oxide material as a test piece was formed in a similar way to Example 2, except that a mixture of zinc oxide (ZnO) , water and phosphoric acid ($H_3PO_4$), as starting materials, at a weight ratio of 50:17:33 was formed.

In Example 6, an oxide material as a test piece was formed in a similar way to Example 2, except that a mixture of gypsum hemihydrate ($CaSO_4 \cdot 1/2H_2O$), water and calcium phosphate hydrate ($Ca(H_2PO_4)_2 \cdot H_2O$), as starting materials, at a weight ratio of 45:50:5 was formed.

In Example 7, a dry powdery material formed by drying calcium sulfate dihydrate ($CaSO_4 \cdot 2H_2O$) at not less than 50 °C for two days was used as a starting material. A mixture of the dry powdery material and water at a weight ratio of 1:1 was formed. A disk-shaped body (15 mm diameter x 1 mm thick) was formed from the mixture. The shaped body was naturally dried into a hardened body and thus an oxide material was formed as a test piece. Note that when calcium sulfate dihydrate ($CaSO_4 \cdot 2H_2O$) and water were mixed at a weight ratio of 1:1, the mixture was not fully hardened and no satisfactorily shaped body was obtained.

Regarding Example 1 to Example 7, Table 1 shows the mixing ratios (% by weight) of the starting materials. Table 2 shows the composition of the proton conductive materials, whether shaped bodies could be shaped or not, and proton conductivity (S/cm) of the materials at 25 °C. The percent by weight of CaO, $SO_3$, $P_2O_5$, ZnO, and $H_2O$ shown in Table 2 are values calculated from the mixing ratios of the starting materials. It is possible to think that $H_2O$ is contained as water, water of crystallization, or the like, but the percent by weight of $H_2O$ shown in Table 2 means the quantity of water calculated from the mixing ratios of the starting materials.

As shown in Table 1, Examples 1 to 7 had good proton conductivity at 25 °C. Specifically, the proton conductivity of Example 1 was $4 \times 10^{-5}$ (S/cm), that of Example 2 was $5 \times 10^{-3}$ (S/cm) , that of Example 3 was $1 \times 10^{-2}$ (S/cm), that of Example 4 was $3 \times 10^{-2}$ (S/cm), that of Example 6 was $4 \times 10^{-6}$ (S/cm) and that of Example 7 was $5 \times 10^{-5}$ (S/cm).

As shown in Table 2, Example 1 and Example 7 were designed to contain the element of calcium (Ca) in the range of not less than 10 % by weight and not more than 45 % by weight calculated as CaO, the element of sulfur (S) in the range of not less than 15 % by weight and not more than 60 % by weight calculated as $SO_3$, and the element of hydrogen (H) in the range of not less than 5 % by weight and not more than 55 % by weight calculated as $H_2O$.

Example 2 to Example 6 were designed to contain the element of calcium (Ca) in the range of not less than 10 % by weight to not more than 30 % by weight calculated as CaO, the element of sulfur (S) in the range of not less than 15 % by weight and not more than 50 % by weight calculated as $SO_3$, the element of hydrogen (H) in the range of not less than 10 % by weight and not more than 55 % by weight calculated as $H_2O$, and the element of phosphorus (P) in the range of not less than 0.1 % by weight and not more than 50 % by weight calculated as $P_2O_5$.

Table 3 shows the mixing ratios (% by weight) of starting materials of Examples 8 to 11. As shown in Table 3, in Example 8, 41.7 % by weight of gypsum hemihydrate ($CaSO_4 \cdot 1/2H_2O$), 8.3 % by weight of ammonium sulfate (($NH_4)_2SO_4$), 10 % by weight of phosphoric acid ($H_3PO_4$), 40 % by weight of water ($H_2O$) as starting materials were mixed to form a mixture. A disk-shaped body (15 mm diameter x 1 mm thick) was formed from the mixture. The shaped body was hardened by natural drying into a hardened body, and thus an oxide material was formed as a test piece.

In Example 9, 41.7 % by weight of gypsum hemihydrate ($CaSO_4 \cdot 1/2H_2O$), 8.3 % by weight of aluminum sulfate hydrate ($Al_2(SO_4)_3 \cdot 16$-$18H_2O$), 10 % by weight of phosphoric acid ($H_3PO_4$), and 40 % by weight of water as starting materials were mixed to form a mixture. A shaped body (15 mm diameter x 1 mm thick) was formed from the mixture. The shaped body was hardened by natural drying into a hardened body and thus an oxide material was formed as a test piece.

In Example 10, 45 % by weight of gypsum hemihydrate ($CaSO_4 \cdot 1/2H_2O$), 5 % by weight of barium sulfate ($BaSO_4$), 10 % by weight of phosphoric acid ($H_3PO_4$) and 40 % by weight of water as starting materials were mixed to form a mixture. A disk-shaped body (15 mm diameter x 1 mm thick) was formed from the mixture. The shaped body was hardened by natural drying into a hardened body and thus an oxide material was formed as a test piece.

In Example 11, 45 % by weight of gypsum hemihydrate ($CaSO_4 \cdot 1/2H_2O$), 5 % by weight of zinc sulfate hydrate ($ZnSO_4 \cdot 7H_2O$), 10 % by weight of phosphoric acid ($H_3PO_4$), and 40 % by weight of water as starting materials were mixed to form a mixture. A disk-shaped body (15 mm diameter x 1 mm thick) was formed from the mixture. The shaped body was hardened by natural drying into a hardened body and thus an oxide material was formed as a test piece.

Regarding the test pieces (proton conductive materials) according to Examples 8 to 11, Table 4 shows whether shaped bodies could be formed or not and proton conductivity results at 25 °C. The percent by weight of CaO, $SO_3$, $P_2O_5$, $NO_2$, $Al_2O_3$, BaO, ZnO, and $H_2O$ shown in Table 4 mean values calculated from the mixing ratios of the starting materials. As mentioned above, it is possible to think that $H_2O$ is contained as water, water of crystallization, or the like, but the percent by weight of $H_2O$ shown in Table 4 means the quantity of water calculated from the mixing ratios of the starting materials.

All of Examples 8 to 11 had good shaping ability and good proton conductivity. Specifically, the proton con-

**EP 1 953 765 A1**

ductivity of Example 8 was $7 \times 10^{-4}$ S/cm, that of Example 9 was $1 \times 10^{-3}$ S/cm, that of Example 10 was $1 \times 10^{-3}$ S/cm, and that of Example 11 was $4 \times 10^{-4}$ S/cm.

Figure 3 shows the relationship between measuring temperature and proton conductivity. The lower horizontal axis of Figure 3 represents 1000/T and the upper horizontal axis of Figure 3 represents absolute temperature (K) and centigrade temperature (˚C). The vertical axis of Figure 3 represents log σ (S/cm). "-2" on the vertical axis indicates $1 \times 10^{-2}$. In Figure 3, □ indicates Example 1, ○ indicates Example 2, × indicates Example 3, ◇ indicates Example 4, ● indicates Example 6, and △ indicates Example 7. According to Figure 3, all of Example 1 to Example 7 had good proton conductivity in the temperature range from 298 K (25 ˚C, 1000/T=3.4) to 588 K (1000 / T=1.7). Especially, Example 4, Example 3 and Example 2 had good proton conductivity.

As mentioned above, in Example 4, a hardened body obtained by hardening a shaped body using gypsum hydrate as a base material was used and impregnated with a phosphoric acid solution, whereby mobile hydrogen ions were introduced into the hardened body using the gypsum hydrate as a base material. The test piece of Example 3 was formed by increasing the ratio of phosphoric acid in mixing gypsum hemihydrate ($CaSO_4 \cdot 1/2H_2O$), water, and phosphoric acid ($H_3PO_4$). It is apparent from this that the use of phosphoric acid is effective to enhance proton conductivity.

Figure 4 schematically shows a concept of measuring proton conductivity. In this case, a disk-shaped test piece 10 (diameter: 15 mm) formed of a proton conductive material was produced. The test piece 10 had a thickness t. Both sides of the test piece 10 were sandwiched between platinum plates 12 of 15 mm square. The platinum plates 12 were respectively connected to a resistance measuring device (Impedance analyzer 4192A, produced by Hewlettpackard) through platinum wires. Note that when measurement was carried out above room temperature, the test piece 10 was heated with the whole covered by a tubular electric furnace. A thermocouple was placed just below the test piece 10. Resistivity was measured at respective temperatures. Proton conductivity ( σ ) was calculated by using the following Formula 1, where electrode area was $1.77\ cm^2$ ($S = 1.5/2 \times 1.5/2 \times \pi = 1.77\ cm^2$) and t is the thickness of the test piece 10.

$$\sigma\ =\ (1/R)\ \times\ (t/S)\ \ldots\ (Formula\ 1)$$

In addition, Figure 5 shows test results of V-I characteristics (room temperature, sample thickness: 1 mm) when the proton conductive material was applied to a hydrogen concentration cell. The horizontal axis of Figure 5 represents electric current density. The vertical axis of Figure 5 represents cell voltage and output power density. In Figure 5, the characteristic curve W1 indicates cell voltage and the characteristic curve W2 indicates output power density.

Figure 6 schematically shows a concept of measuring characteristics of the above hydrogen concentration cell. A hydrogen gas sensor 20 formed from the above hydrogen concentration cell comprises a reference electrode 22 facing a first atmosphere 21 to be supplied with a reference gas as a reference material, a measuring electrode 24 facing a second atmosphere 23 to be supplied with a gas to be measured which serves as an object to be measured, and an electrolyte layer 25 sandwiched between the reference electrode 22 and the measuring electrode 24. The electrode layer 25 is a test piece formed of the proton conductive material.

In this case, a disk-shaped test piece (diameter: 15 mm, thickness: 1 mm) was produced. A circle of 8 mm in diameter was drawn on the center of both the sides of the test piece. Then, platinum loaded-carbon kneaded with an aqueous polyvinyl alcohol (PVA) solution was coated within the circles. Using measuring tubes 27, 28 formed of ceramics (alumina) and having a diameter of 15 mm, a platinum net (corresponding to a reference electrode 22) was attached on a cross section of an axial end of the measuring tube 27, while a platinum net (corresponding to a measuring electrode 24) was attached on a cross section of an axial end of the measuring tube 28. The reference electrode 22 and the measuring electrode 25 were respectively connected to a measuring device 31 (Potentio-Galvanostat HA-151 produced by Hokuto Denko) through platinum wires 29, 30. Electrical conduction was checked and gas leakage was prevented by sealing with a silicone-based sealing agent. 10 mol % of hydrogen gas (room temperature) was introduced into the measuring tube 27, while 1 mol % of hydrogen gas (room temperature) was introduced into the measuring tube 28. Both the hydrogen gases were introduced after passing through water at room temperature. Then voltage was measured by the measuring device 31. When measured values became stable, the voltage was recorded. Varying electric current values to be taken out, voltage values at the respective electric current values were recorded. In this case, current density was calculated from electrode area ($0.5\ cm^2$).

Figure 7 shows test results of V-I characteristics when the proton conductive material was applied to a fuel cell. The horizontal axis of Figure 7 represents current density and the left vertical axis of Figure 7 represents cell voltage and the right vertical axis of Figure 7 represents output power density. In this case, the fuel cell was operated at room temperature. In Figure 7, the characteristic curve X1 indicates cell voltage and the characteristic curve X2 indicates output power density. As shown by the characteristic curve X2, output power of about $0.045\ mW/cm^2$ was obtained.

Figure 8 shows a concept of measuring V-I characteristics of the above fuel cell. This fuel cell comprises a fuel electrode to be supplied with fuel (pure hydrogen gas), an oxidant electrode to be supplied with an oxidant (air) , and an electrolyte layer sandwiched between the fuel electrode and the oxidant electrode. The electrolyte layer was formed of the proton conductive material.

First a disk-shaped test piece 40 (a proton conductive material) having a diameter of 15 mm and a thickness of 1 mm was produced. A circle of 8 mm in diameter was drawn on the center of both sides of the test piece 40. On one surface of the test piece 40, platinum-loaded carbon kneaded with an aqueous polyvinyl alcohol (PVA) solution (corresponding to a fuel electrode) was coated within the circle. On the other surface of the test piece 40, platinum-loaded carbon kneaded with an aqueous polyvinyl alcohol (PVA) solution (corresponding to an oxidant electrode) was coated within the circle. Then a platinum net 45 was attached to a cross section of an axial end of a measuring tube 41 formed of ceramic (alumina) and having a diameter of 15 mm, while a platinum net 46 was attached to a cross section of an axial end of a measuring tube 42 formed of ceramics (alumina) and having a diameter of 15 mm. The platinum nets 45, 46 functioned as power collectors. Platinum wires 47, 48, which were connected to the platinum nets 45, 46 were respectively connected to a measuring device 49. Electrical conduction was checked and gas leakage between the measuring tubes 41, 42 was prevented by sealing with a silicone-based sealing agent. Pure hydrogen gas was introduced into the measuring tube 41. The air was introduced into the measuring tube 42. Both the hydrogen gas and the air were introduced after passing through water at room temperature. Voltage measurement was carried out and when measured values became stable, the voltage was recorded.

**[TABLE 1]**

| | MIXING RATIO OF STARTING MATERIALS (% bv weight) | | | | | |
|---|---|---|---|---|---|---|
| | $CaSO_4 \cdot 1/2H_2O$ | $CaSO_4 \cdot 2H_2O$ | $Ca(H_2PO_4) \cdot H_2O$ | ZnO | $H_3PO_4$ | $H_2O$ |
| Ex.1 | 50 | - | - | - | - | 50 |
| Ex.2 | 50 | - | - | - | 10 | 40 |
| Ex.3 | 50 | - | - | - | 17 | 33 |
| Ex.4 | 50 | - | - | - | impregnation | 50 |
| Ex.5 | - | - | - | 50 | 33 | 17 |
| Ex.6 | 45 | - | 5 | - | - | 50 |
| Ex.7 | - | 50* | - | - | - | 50 |

*A powdery material obtained by drying $CaSO_4 \cdot 2H_2O$ at 50˚C for two days was used.

[TABLE 2]

| | PROTON CONDUCTIVE MATERIAL (% by weight) CALCULATED VALUE | | | | | FORMING SHAPED BODIES | CONDUCTIVITY at 25˚C (S/cm) |
|---|---|---|---|---|---|---|---|
| | CaO | $SO_3$ | $P_2O_5$ | ZnO. | $H_2O$ | | |
| EX.1 | 19.3 | 27.6 | - | - | 53.1 | ○ | $4 \times 10^{-5}$ |
| EX.2 | 19.3 | 27.6 | 7.2 | - | 45.9 | O | $5 \times 10^{-3}$ |
| EX.3 | 19.3 | 27.6 | 12.3 | - | 40.8 | O | $1 \times 10^{-2}$ |
| EX.4 | 19.3 | 27.6 | 9.7 | - | 43.4 | O | $3 \times 10^{-2}$ |
| EX.5 | - | - | 23.9 | 50 | 26.1 | ○ | |
| EX.6 | 18.5 | 24.8 | 2.8 | - | 53.9 | ○ | $4 \times 10^{-6}$ |
| EX.7 | 19.3 | 27.6 | - | - | 53:1 | ○ | $5 \times 10^{-5}$ |

[TABLE 3]

| | MIXING RATIO OF STARTING MATERIALS (% by weight) | | | | | | |
|---|---|---|---|---|---|---|---|
| | $CaSO_4 \cdot 1/2H_2O$ | $(NH_4)_2SO_4$ | $Al_2(SO_4)_3 \cdot 16-18H_2O$ | $BaSO_4$ | $ZnSO_4 \cdot 7H_2O$ | $H_3PO_4$ | $H_2O$ |
| EX. 8 | 41.7 | 8.3 | - | - | - | 10 | 40 |

(continued)

| | MIXING RATIO OF STARTING MATERIALS (% by weight) | | | | | | |
|---|---|---|---|---|---|---|---|
| | $CaSO_4 \cdot 1/2H_2O$ | $(NH_4)_2SO_4$ | $Al_2(SO_4)_3 \cdot 16\text{-}18H_2O$ | $BaSO_4$ | $ZnSO_4 \cdot 7H_2O$ | $H_3PO_4$ | $H_2O$ |
| EX. 9 | 41.7 | - | 8.3 | - | - | 10 | 40 |
| EX. 10 | 45 | - | - | 5 | - | 10 | 40 |
| EX. 11 | 45 | - | - | - | 5 | 10 | 40 |

[TABLE 4]

| | PROTON CONDUCTIVE MATERIAL (% by weight) CALCULATED VALUE | | | | | | | | FORMING SHAPED BODIES | CONDUCTIVITY at 25°C (S/cm) |
|---|---|---|---|---|---|---|---|---|---|---|
| | CaO | $SO_3$ | $P_2O_5$ | $NO_2$ | $Al_2O_3$ | BaO | ZnO | $H_2O$ | | |
| EX.8 | 16.1 | 28.0 | 7.2 | 5.8 | - | - | - | 42.9 | ○ | $7 \times 10^{-4}$ |
| EX.9 | 16.1 | 26.2 | 7.2 | - | 1.3 | - | - | 49.2 | O | $1 \times 10^{-3}$ |
| EX. 10 | 17.4 | 26.5 | 7.2 | - | - | 3.3 | - | 45.6 | O | $1 \times 10^{-3}$ |
| EX. 11 | 17.4 | 26.2 | 7.2 | - | - | - | 1.4 | 47.8 | O | $4 \times 10^{-4}$ |

(Others)

The present invention is not limited to the embodiments described above and shown in the drawings, and can be reduced to practice with appropriate modifications if necessary. The present invention can be grasped as the following technical concepts.

(Appendix 1) A proton conductive material recited in claim 1, characterized in containing calcium in an amount of not less than 10 % by weight and not more than 45 % by weight calculated as CaO, sulfur in an amount of not less than 15 % by weight and not more than 50 % by weight calculated as $SO_3$ , and hydrogen in an amount of not less than 5 % by weight and not more than 55 % by weight calculated as $H_2O$.

(Appendix 2) A proton conductive material recited in claim 1, characterized in containing calcium in an amount of not less than 10 % by weight and not more than 40 % by weight calculated as CaO, sulfur in an amount of not less than 15 % by weight and not more than 60 % by weight calculated as $SO_3$, hydrogen in an amount of not less than 5 % by weight and not more than 55 % by weight calculated as $H_2O$ and phosphorus in an amount of not less than 0.1 % by weight and not more than 50 % by weight calculated as $P_2O_5$.

(Appendix 3) A proton conductive material recited in claim 1, characterized in containing carbon in an amount of not less than 15 % by weight and not more than 30 % by weight calculated as CaO, sulfur in an amount of not less than 18 % by weight and not more than 50 % by weight calculated as $SO_3$, and hydrogen in an amount of not less than 10 % by weight and not more than 55 % by weight calculated as $H_2O$.

(Appendix 4) A proton conductive material recited in claim 1, characterized in containing carbon in an amount of not less than 10 % by weight and not more than 30 % by weight calculated as CaO, sulfur in an amount of not less than 15 % by weight and not more than 50 % by weight calculated as $SO_3$, hydrogen in an amount of not less than 10 % by weight and not more than 55 % by weight calculated as $H_2O$ and phosphorus in an amount of not less than 0.1 % by weight and not more than 50 % by weight calculated as $P_2O_5$.

INDUSTRIAL APPLICABILITY

The present invention can be applied to a proton conductive material exhibiting good proton conductivity at room temperature. The present invention can also be applied to a hydrogen concentration cell, a hydrogen sensor, a fuel cell and the like equipped with the proton conductive material, and can be used, for example, from room temperature to about 300 °C.

**Claims**

1.   A proton conductive material, **characterized in** comprising the element of calcium (Ca), the element of sulfur (S) and the element of hydrogen (H), respectively, and having a proton conductivity of not less than $10^{-6}$ S/cm at room temperature.

2. A proton conductive material recited in claim 1, **characterized in** using sulfate as a base material.

3. A proton conductive material recited in claim 1 or claim 2, **characterized in** comprising the element of calcium (Ca) in an amount of not less than 10 % by weight and not more than 45 % by weight calculated as CaO, the element of sulfur (S) in an amount of not less than 15 % by weight and not more than 60 % by weight calculated as $SO_3$, and the element of hydrogen (H) in an amount of not less than 5 % by weight and not more than 55 % by weight calculated as $H_2O$.

4. A proton conductive material recited in claim 1 or claim 2, **characterized in** comprising the element of calcium (Ca) in an amount of not less than 10 % by weight and not more than 45 % by weight calculated as CaO, the element of sulfur (S) in an amount of not less than 15 % by weight and not more than 60 % by weight calculated as $SO_3$, the element of hydrogen (H) in an amount of not less than 5 % by weight and not more than 55 % by weight calculated as $H_2O$, and the element of phosphorus (P) in an amount of not less than 0.1 % by weight and not more than 50 % by weight calculated as $P_2O_5$.

5. A proton conductive material recited in any one of claim 1 to claim 4, **characterized in** containing not less than 40 % by weight of calcium sulfate.

6. A proton conductive material recited in any one of claim 1 to claim 4, **characterized in** comprising not less than 40 % by weight of calcium sulfate dihydrate ($CaSO_4 \cdot 2H_2O$).

7. A proton conductive material recited in claim 1, **characterized in** being formed of a hardened body obtained by hardening, with water, a raw material containing calcium sulfate ($CaSO_4$) as a main component.

8. A proton conductive material recited in claim 1, **characterized in** being formed by reacting a raw material containing not less than 40 % by weight of calcium sulfate ($CaSO_4$) with phosphoric acid.

9. A proton conductive material recited in claim 1, **characterized in** being formed by mixing calcium sulfate hemihydrate and an aqueous solution and by hardening the mixture.

10. A proton conductive material recited in claim 1, **characterized in** being formed by mixing calcium sulfate hemihydrate and an acid solution and by hardening the mixture.

11. A proton conductive material recited in claim 1, **characterized in** being formed by mixing calcium sulfate hemihydrate and an aqueous solution containing phosphoric acid, and/or phosphate, and by hardening the mixture.

12. A proton conductive material recited in claim 1, formed by introducing mobile hydrogen ions into a hardened body using gypsum hydrate as a base material.

13. A proton conductive material recited in claim 1, **characterized in** being formed by impregnating a hardened material using gypsum hydrate as a base material with an aqueous solution containing phosphoric acid and/or phosphate.

14. A process for producing a proton conductive material according to claim 1, **characterized in** comprising the steps of:

   forming a mixture of calcium sulfate hemihydrate and an aqueous solution; and
   hardening the mixture.

15. A process for producing a proton conductive material according to claim 1, **characterized in** comprising the steps of:

   forming a mixture of calcium sulfate hemihydrate and an aqueous solution containing phosphoric acid and/or phosphate; and
   hardening the mixture.

16. A process for producing a proton conductive material according to claim 1, **characterized in** comprising the steps of:

obtaining a hardened body using gypsum hydrate as a base material; and
introducing mobile hydrogen ions into the hardened body using the gypsum hydrate as a base material.

17. A hydrogen concentration cell, comprising a reference electrode facing a reference material, a measuring electrode facing an object to be measured, and an electrolyte layer sandwiched between the reference electrode and the measuring electrode, and
**characterized in that** the electrolyte layer is formed of a proton conductive material according to any one of claim 1 to claim 16.

18. A hydrogen sensor formed of a hydrogen concentration cell comprising a reference electrode facing a reference material, a measuring electrode facing an object to be measured, and an electrolyte layer sandwiched between the reference electrode and the measuring electrode, and
**characterized in that** the electrolyte layer is formed of a proton conductive material according to any one of claim 1 to claim 16.

19. A fuel cell, comprising a fuel electrode to be supplied with fuel, an oxidant electrode to be supplied with an oxidant, and an electrolyte layer sandwiched between the fuel electrode and the oxidant electrode, and
**characterized in that** the electrolyte layer is formed of a proton conductive material according to any one of claim 1 to claim 16.

# Fig.1

REFERENCE GAS

GAS TO BE MEASURED

12

11

10

$H_2$

$H_2$

$H^+$

$H_2$

$H_2$

$H_2$

$H_2$

EMF

# Fig.2

# Fig.3

# Fig.4

# Fig.5

# Fig.6

# Fig.7

# Fig.8

| INTERNATIONAL SEARCH REPORT | | International application No. |
|---|---|---|
| | | PCT/JP2005/021943 |

A.   CLASSIFICATION OF SUBJECT MATTER
*H01B1/06*(2006.01), *G01N27/409*(2006.01), *G01N27/416*(2006.01), *H01B13/00* (2006.01), *H01M8/02*(2006.01)

According to International Patent Classification (IPC) or to both national classification and IPC

B.   FIELDS SEARCHED

Minimum documentation searched (classification system followed by classification symbols)
H01B1/06, G01N27/409, G01N27/416, H01B13/00, H01M8/02

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X | US 4184751 A  (Nicholson), | 1-3,5-7,9, |
|  | 22 January, 1980 (22.01.80), | 12,14,16 |
| Y | Column 3, line 5 to column 4, line 12; Fig. 2 | 4,8,10,11, |
|  | & JP 53-77494 A         & DE 2756551 A1 | 13,15,17-19 |
| | | |
| X | WO 99/62620 A1  (CREAVIS GESELLSCHAFT FUR | 1-3 |
| Y | TECHNOLOGIE UND INNOVATION MBH), | 17-19 |
|  | 09 December, 1999 (09.12.99), | |
|  | Claims | |
|  | & DE 19741498 A1       & JP 2002-516740 A | |
| | | |
| X | WO 00/45447 A2  (CALIFORNIA INSTITUTE OF | 1-3 |
| Y | TECHNOLOGY), | 17-19 |
|  | 03 August, 2000 (03.08.00), | |
|  | Claims | |
|  | & US 6468684 B1        & JP 2002-536787 A | |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 08 March, 2006 (08.03.06) | 20 March, 2006 (20.03.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

<table>
<tr><td colspan="2" align="center">**INTERNATIONAL SEARCH REPORT**</td><td>International application No.<br>PCT/JP2005/021943</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 11-339820 A  (Tokyo Gas Co., Ltd.),<br>10 December, 1999 (10.12.99),<br>Par. No. [0002]<br>(Family: none) | 4,11,13,<br>17-19 |
| Y | JP 2002-100380 A  (Honda Motor Co., Ltd.),<br>05 April, 2002 (05.04.02),<br>Par. No. [0002]<br>(Family: none) | 4,11,13,<br>17-19 |
| Y | JP 2003-217339 A  (Nagoya Industrial Science Research Institute),<br>31 July, 2003 (31.07.03),<br>Claims<br>& WO 03/060925 A1 | 8,10,15,<br>17-19 |
| Y | JP 2005-255442 A  (Chubu University, Tokyo Yogyo Kabushiki Kaisha, Toho Gasu Kabushiki Kaisha),<br>22 September, 2005 (22.09.05),<br>Par. No. [0095]<br>(Family: none) | 17-19 |
| Y | JP 10-67558 A  (Santoku Metal Industry Co., Ltd.),<br>10 March, 1998 (10.03.98),<br>Par. No. [0041]<br>(Family: none) | 17-19 |
| E,X | JP 2005-332610 A  (Akechi Ceramics Co., Ltd.),<br>02 December, 2005 (02.12.05),<br>Full text; Figs. 1 to 8<br>(Family: none) | 1-19 |
| A | JP 2-226609 A  (Nippon Enu Yu Esu Kabushiki Kaisha, Merudasu System Engineering Kabushiki Kaisha, Cusp Dental Supply Co., Ltd.),<br>10 September, 1990 (10.09.90),<br>(Family: none) | 1-19 |

Form PCT/ISA/210 (continuation of second sheet) (April 2005)